# EUROPÄISCHE PATENTSCHRIFT

(11) **EP 0 579 209 B1**
(45) Veröffentlichungstag und Bekanntmachung des Hinweises auf die Patenterteilung: **24.09.1997**
(21) Anmeldenummer: 93111306.2
(22) Anmeldetag: 14.07.1993
(51) Int. Cl.: B01J 2/20, A23K 1/00

(54) **Verfahren zum Herstellen eines Futtermittels**
Process for the production of foodstuffs
Procédé pour la production de fourrage

(30) Priorität: 15.07.1992 DE 9209511 U
(43) Veröffentlichungstag der Anmeldung: 19.01.1994
(73) Patentinhaber: Amandus Kahl GmbH & Co., 21465 Reinbek (DE)
(72) Erfinder: Behrmann, Joachim, D-21465, Reinbek (DE)
(74) Vertreter: Glawe, Delfs, Moll & Partner

(56) Entgegenhaltungen:
- EP-A- 0 331 207
- DE-C- 874 399
- FR-A- 1 239 708

## Beschreibung

Die Erfindung betrifft ein Verfahren zum Herstellen eines Futtermittels und ein damit hergestelltes Futtermittel.

Nutz- und Heimtiere werden in der Regel mit Mischfuttermitteln gefüttert. Diese enthalten durch Mischung und Bearbeitung alle für den jeweiligen Einsatzzweck notwendigen Bestandteile.

Bestandteile sind pflanzliche oder tierische Produkte oder Nebenprodukte, ergänzt durch Mineralien, Vitamine und andere sinnvolle Komponenten.

Es ist Aufgabe des Mischfutterherstellers, das Mischfutter so zu behandeln, zu präparieren und zu formen, daß es bis zur Aufnahme durch das Tier sich nicht entmischt und dem Tier durch Verabreichung durch Menschen oder Apparate im gewünschten Zustand zur Verfügung steht.

Diese Aufgabe wird durch die Mischfutterindustrie bisher auf drei Wegen gelöst:
a) Mischung von Mehlen ähnlicher Korngröße mit Flüssigkeiten wie Fett und Melasse o.a. zur Bindung.
b) Pelletierung solcher Mischungen
c) Pelletierung und Krümelung (Granulierung)

Nach Verfahren a) erzeugtes Futter kann z.B. als Legemehl für Hühner oder als im Trog mit Wasser oder anderen Bestandteilen angerührte Masse an Schweine verfüttert werden, nicht jedoch z.B. an Großtiere wie Rinder.

Nach Verfahren b) erzeugtes Futter findet Anwendung für alle Tierarten und wird sowohl manuell als auch automatisch verabreicht. Dieses Verfahren ist jedoch mit hohem Energieaufwand behaftet.

Im Verfahren c) wird dieses Futter für Kleintiere (Geflügel, Ferkel u.a.) durch Zerkleinerung mittels Zweiwalzenstühlen besser aufnehmbar gemacht. Auch Schweinefutter, welches naß verfüttert werden soll, wird so erzeugt.

In letzter Zeit wurde zur Verbesserung der Pelletierung die Druckkonditionierung bekannt, bei der die Futtermischung vor der Pelletpresse einer Kurzzeit-Hochtemperaturbehandlung in einem Expander unterzogen wird (EP-B-0 331 207).

Die Aufgabe der Erfindung besteht in der Schaffung eines Verfahrens, mit dem ein verbessertes Futtermittel mit vielen Vorteilen erhalten werden kann und das zudem im Vergleich mit der Pelletierung energiesparender ist. Eine weitere Aufgabe besteht in der Schaffung eines Futtermittels, das nach dem Verfahren hergestellt ist.

Die erfindungsgemäße Lösung ergibt sich aus dem Hauptanspruch und den Unteransprüchen.

Das nach dem Verfahren hergestellte Futtermittel hat viele Vorteile.

Es ist entmischungsfrei, hat günstige einstellbare Korngrößenverteilung sowie gute Dispergierbarkeit zur Naßfütterung, wobei eine volle Dispergierung in Wasser bei 15°C in weniger als 10 Minuten zu erreichen ist. Das Futtermittel ist in automatischen Fütterungsanlagen gut handhabbar und besitzt eine gute Aufnahmefähigkeit für die nachträgliche Hinzufügung von festen, flüssigen oder gasförmigen Komponenten, welche z.B. temperaturempfindlich sind, so daß sie vor der Konditionierung nicht hinzugefügt werden können. Das Futtermittel kann erfindungsgemäß unter Verwendung jedes handelsüblichen Expanders hergestellt werden.

Im folgenden sollen noch Einzelheiten des erfindungsgemäßen Verfahrens erläutert werden, mit dem die erfindungsgemäßen Futtermittel hergestellt werden können.

Bei dem Verfahren wird von der Druckkonditionierung in einem Expander ausgegangen, wie es bereits oben als bekannt erwähnt wurde (EP-B-0 331 207). Im Gegensatz zum vorbekannten Verfahren findet aber anschließend keine Pelletierung statt. Das Expandat wird vielmehr nur noch zerkleinert, um so ein strukturiertes Granulat zu erhalten. Das Zerkleinern findet dabei in einer sogenannten Passiermaschine statt. Erstaunlicherweise erhält man dabei die vorteilhaften, oben erwähnten Eigenschaften des Futtermittels, obwohl auf den sehr energieaufwendigen Schritt der Pelletierung verzichtet worden ist. Durch die Erfindung wurde daher das Vorurteil überwunden, man könne Futtermittel der entsprechenden Qualität nur durch Pelletieren erhalten.

Vorteilhafterweise wird das Material ca. 2 bis 20 Sekunden, besonders vorteilhaft etwa 6 bis 10 Sekunden im Reaktionsbehälter behandelt. Der Behandlungsdruck im Reaktionsbehälter beträgt dabei vorteilhafterweise 1 bis 100 bar, während es besonders vorteilhaft ist, einen Behandlungsdruck im Bereich von 10 bis 30 bar vorzusehen.

Vorteilhafte Werte für die Behandlungstemperatur im Reaktionsbehälter sind 70°C bis 170°C, insbesondere 90°C bis 150°C.

Die Behandlung im Reaktionsbehälter wird zweckmäßigerweise bei einer Materialfeuchte von 12 bis 22 Gew.-% Wasser durchgeführt, wobei Werte zwischen ungefähr 14 und 19 Gew.-% Wasser besonders vorteilhaft sind.

Das Zerkleinern kann zu einem beliebigen Zeitpunkt nach dem Austreten des Expandats aus dem Expander bzw. Reaktionsbehälter stattfinden. Man kann also das Material zumindestens teilweise abkühlen lassen. Besonders vorteilhaft ist es, wenn das Zerkleinern unmittelbar nach dem Austritt des Materials aus dem Reaktionsbehälter stattfindet, wenn das Expandat noch feucht und plastisch ist. Außerdem wird auf diese Weise Zeit und Raum für Zwischenlagerungen gespart. Dabei findet das Zerkleinern vorteilhafterweise bei einer Materialtemperatur von ca. 50°C bis 150°C, insbesondere bei ungefähr 70°C bis 110°C statt. In diesem Falle beträgt die Materialfeuchte beim Zerkleinern ca. 10 bis 20 Gew.-% Wasser, insbesondere 12 bis 18 Gew.-% Wasser.

Das Futtermittel, das ein strukturiertes Granulat ist, kann eine Korngrößenverteilung im Bereich von 0,1 bis 35 mm aufweisen. Eine Korngrößenverteilung von ungefähr 0,5 bis 4 mm ist besonders vorteilhaft für Legehennen, eine Korngrößenverteilung von ungefähr 0,5 bis 10 mm ist besonders vorteilhaft für Mastschweine, eine Korngrößenverteilung von ungefähr 0,3 bis 4,5 mm ist besonders vorteilhaft für Mastgeflügel, und eine Korngrößenverteilung von ungefähr 1,0 bis 20 mm ist besonders vorteilhaft für Rinder.

Im folgenden wird der prinzipielle Aufbau einer Vorrichtung beispielsweise beschrieben, mit der das erfindungsgemäße Futtermittel hergestellt werden kann. Es zeigen:
- Fig. 1: die Zerkleinerungsvorrichtung von der Seite; und
- Fig. 2: die Zerkleinerungsvorrichtung der Fig. 1 in einer Ansicht von oben.

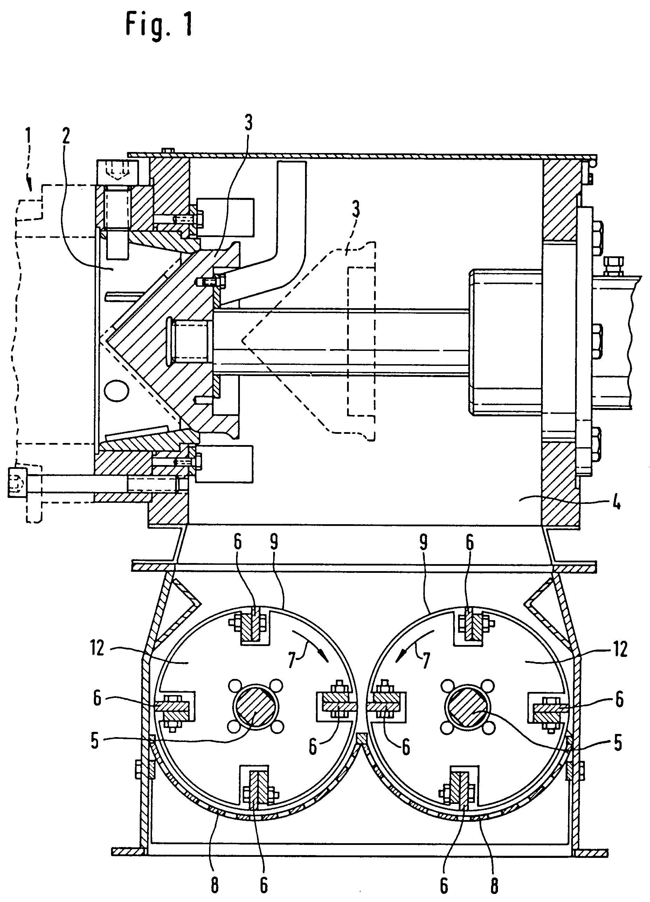

Das Material wird zunächst in einem Reaktionsbehälter behandelt, der bei 1 angedeutet ist. In diesem Reaktionsbehälter wird das Material durch eine Förderschnecke gegen den Ausgang 2 des Reaktionsbehälters 1 gedrückt, der durch einen kegelförmigen Stempel 3 zunächst verschlossen ist. Das Material kann dabei im Reaktionsbehälter 1 noch mit Dampf beaufschlagt werden, um es zu befeuchten und zu erwärmen, falls die Reibungswärme der Förderschnecke nicht ausreicht. Hat der Innendruck einen gewissen Wert erreicht, so weicht der kegelförmige Verschlußstempel 3 zurück, wie dies in Fig. 1 gestrichelt dargestellt ist. Das Expandat tritt aus der Austrittsöffnung 2, die jetzt ringspaltförmig ist, aus. Unterhalb des Austrittsraums 4 befinden sich zwei horizontale Wellen 5, an denen in einem Abstand über entsprechenden Scheiben 12 Leisten bzw. Messer 6 befestigt sind, die auf Kreisbahnen in Richtung der Pfeile 7 umlaufen. Der untere Teil der Kreisbahn 9, auf dem sich die leistenförmigen Messer 6 bewegen, ist dabei durch Lochbleche 8 abgedeckt, durch die das durch die Messer 6 zerkleinerte Material hindurchgedrückt, -gestrichen und/oder -geschleudert wird.

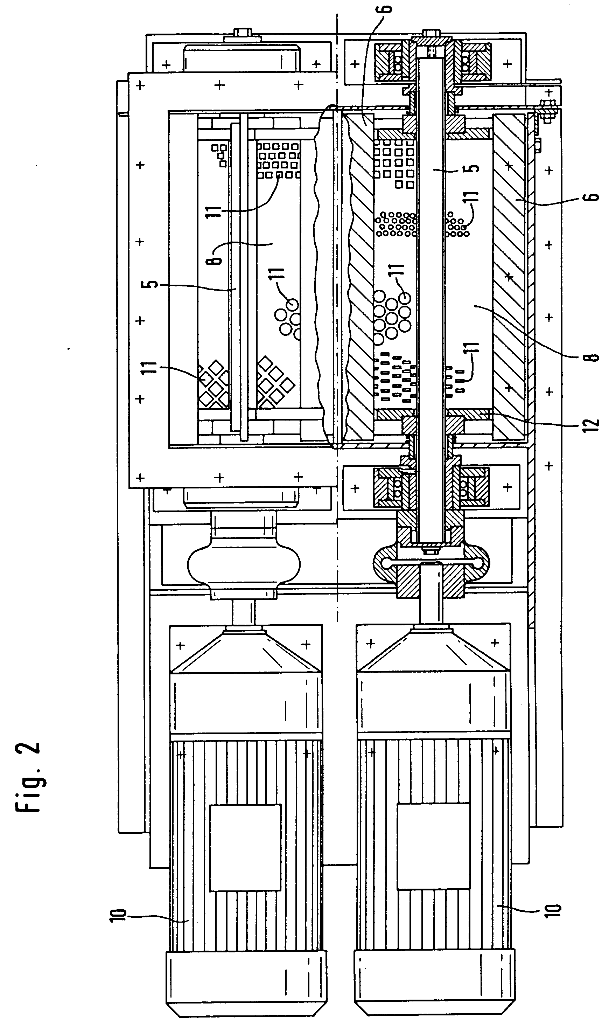

Wie dies in Fig. 2 dargestellt ist, werden die Wellen 5 durch Motoren 10 angetrieben. Die Lochbleche 8 können mit Löchern verschiedener Formen je nach Verwendungszweck versehen sein, von denen in der Fig. 2 einige bei 11 dargestellt sind.

## Patentansprüche

1. Verfahren zum Herstellen von Futtermitteln, bei dem das Ausgangsmaterial in einem Reaktionsbehälter bei erhöhter Temperatur konditioniert wird, wobei das Material im Reaktionsbehälter durch die Wirkung eines Förderelements komprimiert wird, so daß sich am Austragsende des Reaktionsbehälters ein auf das Material oder Materialgemisch wirkender Arbeitsdruck einstellt, und wobei dieser auf diese Materialmenge wirkende Druck ausschließlich durch Entspannung auf einen verminderten, unterhalb dieses Drucks liegenden Druck, insbesondere Atmosphärendruck abgesenkt wird, dadurch gekennzeichnet, daß das so gewonnene Zwischenprodukt zerkleinert wird, indem es durch auf einer Kreisbahn rotierende Leisten durch Lochsiebe gedrückt, gestrichen und/oder geschleudert wird, die im wesentlichen unterhalb der Kreisbahn nahe an den rotierenden Leisten angeordnet sind.

2. Verfahren nach Anspruch 1, dadurch gekennzeichnet, daß das Material ca. 2 bis 20 Sekunden im Reaktionsbehälter behandelt wird.

3. Verfahren nach Anspruch 1, dadurch gekennzeichnet, daß das Material ca. 6 bis 10 Sekunden im Reaktionsbehälter behandelt wird.

4. Verfahren nach einem der Ansprüche 1 bis 3, dadurch gekennzeichnet, daß der Behandlungsdruck im Reaktionsbehälter ca. 1 bis 100 bar beträgt.

5. Verfahren nach Anspruch 1 bis 3, dadurch gekennzeichnet, daß der Behandlungsdruck im Reaktionsbehälter ca. 10 bis 30 bar. beträgt.

6. Verfahren nach einem der Ansprüche 1 bis 5, dadurch gekennzeichnet, daß die Behandlungstemperatur im Reaktionsbehälter ca. 70°C bis 170°C beträgt.

7. Verfahren nach einem der Ansprüche 1 bis 5, dadurch gekennzeichnet, daß die Behandlungstemperatur im Reaktionsbehälter ca. 90°C bis 150°C beträgt.

8. Verfahren nach einem der Ansprüche 1 bis 7, dadurch gekennzeichnet, daß die Behandlung im Reaktionsbehälter bei einer Materialfeuchte von 12 bis 22 Gew.-% Wasser durchgeführt wird.

9. Verfahren nach einem der Ansprüche 1 bis 7, dadurch gekennzeichnet, daß die Behandlung im Reaktionsbehälter bei einer Materialfeuchte von 14 bis 19 Gew.-% Wasser durchgeführt wird.

10. Verfahren nach einem der Ansprüche 1 bis 9, dadurch gekennzeichnet, daß das Zerkleinern unmittelbar nach dem Austritt des Materials aus dem Reaktionsbehälter stattfindet.

11. Verfahren nach Anspruch 10, dadurch gekennzeichnet, daß das Zerkleinern bei einer Materialtemperatur von ca. 50°C bis 150°C stattfindet.

12. Verfahren nach Anspruch 10, dadurch gekennzeichnet, daß das Zerkleinern bei einer Materialtemperatur von ca. 70°C bis 110°C stattfindet.

13. Verfahren nach einem der Ansprüche 1 bis 12, dadurch gekennzeichnet, daß das Zerkleinern bei einer Materialfeuchte von ca. 10 bis 20 Gew.-% Wasser stattfindet.

14. Verfahren nach einem der Ansprüche 1 bis 12, dadurch gekennzeichnet, daß das Zerkleinern bei einer Materialfeuchte von ca. 12 bis 18 Gew.-% Wasser stattfindet.

15. Verfahren nach einem der Ansprüche 1 bis 14, dadurch gekennzeichnet, daß ein handelsüblicher Expander verwendet wird.

16. Futtermittel, dadurch gekennzeichnet, daß es nach einem der Ansprüche 1 bis 14 hergestellt ist.

17. Futtermittel, dadurch gekennzeichnet, daß es als strukturiertes Granulat mit einer Korngrößenverteilung im Bereich von 0,1 bis 35 mm ausgebildet ist.

18. Futtermittel nach Anspruch 17, dadurch gekennzeichnet, daß die Korngrößenverteilung ca. 0,5 bis 4 mm beträgt.

19. Futtermittel nach Anspruch 17, dadurch gekennzeichnet, daß die Korngrößenverteilung ca. 0,5 bis 10 mm beträgt.

20. Futtermittel nach Anspruch 17, dadurch gekennzeichnet, daß die Korngrößenverteilung ca. 0,3 bis 4,5 mm beträgt.

21. Futtermittel nach Anspruch 17, dadurch gekennzeichnet, daß die Korngrößenverteilung ca. 1,0 bis 20 mm beträgt.

## Claims

1. Method for the production of fodders, in which the initial material is conditioned at increased temperature in a reaction vessel, the material in the reaction vessel being compressed as a result of the action of a conveying element, so that a working pressure acting on the material or material mixture is established at the discharge end of the reaction vessel, and this pressure acting on this quantity of material being lowered solely as a result of expansion to a reduced pressure, in particular atmospheric pressure, which is below this pressure, characterized in that the intermediate product thus obtained is comminuted, in that it is pressed, brushed and/or thrown, by battens rotating on a circular path, through perforated screens which are arranged essentially below the circular path near to the rotating battens.

2. Method according to Claim 1, characterized in that the material is treated in the reaction vessel for approximately 2 to 20 seconds.

3. Method according to Claim 1, characterized in that the material is treated in the reaction vessel for approximately 6 to 10 seconds.

4. Method according to one of Claims 1 to 3, characterized in that the treatment pressure in the reaction vessel is approximately 1 to 100 bar.

5. Method according to Claims 1 to 3, characterized in that the treatment pressure in the reaction vessel is approximately 10 to 30 bar.

6. Method according to one of Claims 1 to 5, characterized in that the treatment temperature in the reaction vessel is approximately 70°C to 170°C.

7. Method according to one of Claims 1 to 5, characterized in that the treatment temperature in the reaction vessel is approximately 90°C to 150°C.

8. Method according to one of Claims 1 to 7, characterized in that treatment in the reaction vessel is carried out with a material moisture of 12 to 22% by weight of water.

9. Method according to one of Claims 1 to 7, characterized in that treatment in the reaction vessel is carried out with a material moisture of 14 to 19% by weight of water.

10. Method according to one of Claims 1 to 9, characterized in that comminution takes place immediately after the material has emerged from the reaction vessel.

11. Method according to Claim 10, characterized in that comminution takes place at a material temperature of approximately 50°C to 150°C.

12. Method according to Claim 10, characterized in that comminution takes place at a material temperature of approximately 70°C to 110°C.

13. Method according to one of Claims 1 to 12, characterized in that comminution takes place with a material moisture of approximately 10 to 20% by weight of water.

14. Method according to one of Claims 1 to 12, characterized in that comminution takes place with a material moisture of approximately 12 to 18% by weight of water.

15. Method according to one of Claims 1 to 14, characterized in that a commercially available expander is used.

16. Fodder, characterized in that it is produced according to one of Claims 1 to 14.

17. Fodder, characterized in that it takes the form of a structured granulate with a grain size distribution in the range of 0.1 to 35 mm.

18. Fodder according to Claim 17, characterized in that the grain size distribution is approximately 0.5 to 4 mm.

19. Fodder according to Claim 17, characterized in that the grain size distribution is approximately 0.5 to 10 mm.

20. Fodder according to Claim 17, characterized in that the grain size distribution is approximately 0.3 to 4.5 mm.

21. Fodder according to Claim 17, characterized in that the grain size distribution is approximately 1.0 to 20 mm.

## Revendications

1. Procédé de préparation de produits alimentaires, dans lequel la matière de départ est conditionnée à température élevée dans un récipient de réaction, la matière étant comprimée dans le récipient de réaction sous l'action d'un élément transporteur de sorte qu'il s'établisse, à l'extrémité de sortie du récipient de réaction, une pression de travail qui agit sur la matière ou le mélange de matières, et cette pression qui agit sur cette quantité de matière étant exclusivement abaissée par détente à une pression réduite, se situant au-dessous de cette pression, en particulier à la pression atmosphérique, caractérisé en ce que le produit intermédiaire ainsi obtenu est mis en menus morceaux par le fait qu'il est comprimé, étalé et/ou projeté, par des lames qui tournent sur une trajectoire circulaire, à travers des tamis en tôle perforée qui sont disposés essentiellement au-dessous de la trajectoire circulaire à proximité des lames en rotation.

2. Procédé selon la revendication 1, caractérisé en ce que la matière est traitée pendant 2 à 20 secondes environ dans le récipient de réaction.

3. Procédé selon la revendication 1, caractérisé en ce que la matière est traitée pendant 6 à 10 secondes environ dans le récipient de réaction.

4. Procédé selon l'une quelconque des revendications 1 à 3, caractérisé en ce que la pression de traitement dans le récipient de réaction est comprise entre 1 et 100 bar environ.

5. Procédé selon l'une quelconque des revendications 1 à 3, caractérisé en ce que la pression de traitement dans le récipient de réaction est comprise entre 10 et 30 bar environ.

6. Procédé selon l'une quelconque des revendications 1 à 5, caractérisé en ce que la température de traitement dans le récipient de réaction est comprise entre 70°C et 170°C environ.

7. Procédé selon l'une quelconque des revendications 1 à 5, caractérisé en ce que la température de traitement dans le récipient de réaction est comprise entre 90°C et 150°C environ.

8. Procédé selon l'une quelconque des revendications 1 à 7, caractérisé en ce que le traitement dans le récipient de réaction est effectué à une humidité de la matière de 12 à 22% en poids d'eau.

9. Procédé selon l'une quelconque des revendications 1 à 7, caractérisé en ce que le traitement dans le récipient de réaction est effectué à une humidité de la matière de 14 à 19% en poids d'eau.

10. Procédé selon l'une quelconque des revendications 1 à 9, caractérisé en ce que la mise en menus morceaux a lieu immédiatement après la sortie de la matière hors du récipient de réaction.

11. Procédé selon la revendication 10, caractérisé en ce que la mise en menus morceaux a lieu à une température de la matière de 50°C à 150°C environ.

12. Procédé selon la revendication 10; caractérisé en ce que la mise en menus morceaux a lieu à une température de la matière de 70°C à 110°C environ.

13. Procédé selon l'une quelconque des revendications 1 à 12, caractérisé en ce que la mise en menus morceaux a lieu à une humidité de la matière d'environ 10 à 20% en poids d'eau.

14. Procédé selon l'une quelconque des revendications 1 à 12, caractérisé en ce que la mise en menus morceaux a lieu à une humidité de la matière d'environ 12 a 18% en poids d'eau.

15. Procédé selon l'une quelconque des revendications 1 à 14, caractérisé en ce qu'un expandeur de volume du commerce est utilisé.

16. Produit alimentaire, caractérisé en ce qu'il est préparé conformément à l'une quelconque des revendications 1 a 14.

17. Produit alimentaire, caractérisé en ce qu'il est se présente sous forme de granulé structuré ayant une distribution granulométrique dans la gamme de 0,1 à 35 mm.

18. Produit alimentaire selon la revendication 17, caractérisé en ce que la distribution granulométrique se situe entre 0,5 et 4 mm environ.

19. Produit alimentaire selon la revendication 17, caractérisé en ce que la distribution granulométrique se situe entre 0,5 et 10 mm environ.

20. Produit alimentaire selon la revendication 17, caractérisé en ce que la distribution granulométrique se situe entre 0,3 et 4,5 mm environ.

21. Produit alimentaire selon la revendication 17, caractérisé en ce que la distribution granulométrique se situe entre 1,0 et 20 mm environ.
